Europäisches Patentamt

European Patent Office

Office européen des brevets

(19)

(11) **EP 1 484 116 A2**

(12) **EUROPEAN PATENT APPLICATION**

(43) Date of publication:
08.12.2004 Bulletin 2004/50

(51) Int Cl.$^7$: **B05C 5/02**

(21) Application number: **04013128.6**

(22) Date of filing: **03.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **03.06.2003 JP 2003157848**

(71) Applicant: **Fuji Photo Film Co., Ltd.
Kanagawa (JP)**

(72) Inventors:
• **Tokimasa, Yasuhiko
  Minami-ashigara-shi Kanagawa (JP)**
• **Tsuji, Akio
  Minami-ashigara-shi Kanagawa (JP)**

(74) Representative: **HOFFMANN - EITLE
Patent- und Rechtsanwälte
Arabellastrasse 4
81925 München (DE)**

(54) **Coating method and coater**

(57)    A coater to coat web (11, 46) includes an extrusion die (13, 40), which has a die slot (15), for ejecting coating solution. A valve is disposed downstream from first and second conduits, for selectively feeding coating solution (8) and bubble removing liquid (7) to the extrusion die. A shifting mechanism (26) moves the extrusion die between an offset position and a coating position. A controller (20) causes the shifting mechanism to set the extrusion die in the offset position, feeds the bubble removing liquid to the extrusion die by setting the valve at the first conduit, feeds the coating solution by setting the valve at the second conduit, and causes the shifting mechanism to move the extrusion die to the coating position, to eject the coating solution from the extrusion die in the coating position. A bead (9, 48) of the coating solution is formed, for applying the coated layer to the web.

FIG. 1

**Description**

BACKGROUND OF THE INVENTION

1. Field of the Invention

The present invention relates to a coating method and coater. More particularly, the present invention relates to a coating method and coater capable of coating web with liquid in a manner free from occurrence of defects due to bubbles in the liquid.

2. Description Related to the Prior Art

A coating apparatus is referred to as a coater, which includes a coater die for coating web with coating solution, to overlay a coated layer on the web. A bead of the coating solution is formed from a distal end of the coater die. To stabilize the coating process by forming the bead in good quality, a back side of the bead is subjected to decompression or reduction of pressure. This back side is located on the upstream side with reference to transport of the web. Note that the term of the web is used to referred to a flexible support material of a sheet form or film form, of which examples include plastic film, paper, metallic foil. The web may be treated by surface treatment, and may have a previously formed layered structure. Examples of the coating solution include solution for an optical compensatory sheet, solution for an anti-reflection film, solution for an antiglare film, magnetic material coating solution, photosensitive material coating solution, color filter pigment solution, surface protecting coating solution, and the like.

The layered films of such high performance types being produced, a coating process should be used safely even though a coating has a wet film thickness as small as 10 microns. Precision in the thickness of the coating and quality of the coating are required being high. In the coating process, degree of decompression on the back side of the bead is likely to be high. However, changes in the decompression remarkably influences forming of the bead according to highness of the degree of decompression in the actual producing line of the layered film.

U.S.P. Publication No. 2003/157,252 (corresponding to JP-A 2003-211052) discloses an extrusion die in an overbite shape, with which the degree of decompression can be reduced. The coater die includes first and second die blocks. A first lip land is an end of the first die block, which is a part of the coater die positioned downstream in the transporting direction. A second lip land is an end of the second die block, which is a part of the coater die positioned upstream. The first lip land has an overbite shape, and has a clearance smaller than that of the second lip land. In other words, the first lip land extends nearer to the web than the second die block.

It is likely that the coating solution contains condensed material produced from solid content therein, undissolved material of the precipitated material, bubbles, and the like. Furthermore, dust is likely to be added to the coating solution before the coating process. The foreign material becomes caught between the web and the end of a die block, and is likely to create streaks or line-shaped defects on the coated layer. To remove this difficulty, the coating process should discontinue. The foreign material is stuck in the small space or clearance at the block end in front of the web. As the clearance of the block and the web is very small, the block distal end of sticking of the foreign material is difficult to wipe sufficiently. The coating process must be interrupted in order to shift the coater die to the offset position for the wiping or cleaning operation. If foreign material flows together with the coating solution without being caught between the coater die and the web, the foreign material becomes contained in the coated layer. This causes a defect on the surface, and lowers the quality of the product in an unallowable manner if remarkable.

Among various difficulties, removing methods that are sufficiently effective are known for removing dust, condensed material and the like. For example, dust stuck on the web can be eliminated by an adhesive roller disposed upstream from a coating position, a static eliminating device operated before the coating process, for removing the dust from the web to be coated. The condensed material in the coating solution can be eliminated by use of a filter, which is disposed in a conduit connected upstream with the coater die, and can remove by the condensed material by filtration. However, a problem remains in relation to bubbles of the coating solution. If certain bubbles are mixed into the coating solution during supply to the coater die, it is possible to use a filter to remove such bubbles. However, no known technique suggests easy removal of bubbles from inside the coater die if bubbles have come to remain in the course of filling a manifold or a die slot in the coater die prior to the coating process. Such bubbles are ejected together with the coating solution in the extruding operation for coating, and causes occurrence of defects on a coater layer. If bubbles are stuck on narrow portions with the clearance between the coater die and the web, streaks may occur.

In consideration of those difficulties, JP-A 5-068927 discloses a coating method capable of removing residual air in the coater die prior to the coating operation. To substitute the coating solution for air, a ventilation hole is formed at an end of the coater die in the flow direction of the manifold. Bubbles in the manifold are ejected before the web is coated continuously. JP-A 9-276771 discloses the use of the manifold having an improved construction. JP-A 9-253556 discloses a method and apparatus of a type for coating a sheet type of substrate with a layer in an intermittent manner.

An extrusion orifice of the coater die is directed upwards while the coating solution is fed and extruded, to remove air from the cavity and path of the coater die. Then the coater die is rotated and positioned for the coating operation.

However, the coater die used in the extrusion die coating process is oriented so as to direct the die slot horizontally, the die slot extending between the manifold and the extrusion orifice. It is conceivable to remove air from the manifold by substitution of liquid or the like. However, it is extremely difficult by substituting for and removal of the air completely with the coating solution in a cavity including a gate, the manifold, the die slot and the extrusion orifice. This problem may be solved in orienting the slot vertically from the manifold to the extrusion orifice by placing the coater die in an erect manner. However, there occurs a problem of contamination of surfaces of the coater die and portions thereabout with extrusion or ejection of the coating solution from the extrusion orifice of the coater die before or during the coating process, because of difficulties in withdrawing the coating solution. Also, a space for installation of the coater requires an enlarged size in the height direction, so the degree of freedom of positioning the coater die will be very low.

It is conceivable to position the coater die for the operation by rotational shift after extrusion of the coating solution upward through the extrusion orifice for removal of air from the cavity in the coater die. However, it is extremely difficult to rotate the coater die which operates with very high precision, has great weight, applies a coating continuously to the web that is at least tens of cm wide. The coater die is so close to the web that a clearance between those is smaller than hundreds of microns. There is importance in precision of a value smaller than 10 microns. If the coater die can be positioned by a certain mechanism, rotational movement of the coater die cannot be controlled easily according to known techniques.

## SUMMARY OF THE INVENTION

In view of the foregoing problems, an object of the present invention is to provide a coating method and coater capable of coating web with liquid in a manner free from occurrence of defects due to bubbles in the liquid.

In order to achieve the above and other objects and advantages of this invention, a coating method of coating web with liquid in a form of a bead is provided, in which a die is used and includes a manifold and a die slot of which one end is connected with the manifold, and another end constitutes an orifice, the liquid is fed to the manifold and ejected from the orifice, to form the bead between the orifice and the web in a coating position where the orifice is positioned close to the web being transported, and a decompression chamber is used for reducing pressure of a portion of the web disposed upstream from the bead as viewed in a transporting direction. In the coating method, there is a first liquid feeding step of feeding the liquid to the manifold while the die is in an offset position offset from the web, and while the die is kept to direct the orifice upwards and to direct the die slot to extend crosswise to a horizontal plane, wherein the liquid is fed to the orifice readily for ejection. In a second liquid feeding step, after the first liquid feeding step, the liquid commonly used in the first liquid feeding step is further fed to the manifold, and the liquid is ejected from the orifice. In a third liquid-feeding/die-moving step, after the second liquid feeding step, the liquid is fed to the manifold, the liquid is ejected from the orifice, and simultaneously the die is moved from the offset position to the coating position. The web starts being coated after the third step.

In the second liquid feeding step, the liquid is fed for 5 minutes or more.

The die slot includes a small-size portion, having a minimum slot thickness equal to or more than 50 microns and equal to or less than 200 microns, and having a length equal to or more than 25 mm in a flowing direction of the liquid. The die in the offset position is kept at such an angle that a condition of:

$$15° \leq \theta1 \leq 90°$$

is satisfied, and is moved from the offset position to the coating position while kept at the angle, where $\theta1$ is a slot angle of the small-size portion having the minimum slot thickness with reference to the horizontal plane.

In the first liquid feeding step, the liquid is fed to the manifold at such a flow rate that an average of a linear flow rate of the liquid in a small-size portion of the die slot having a minimum slot thickness is equal to or smaller than 3 cm/sec.

A dissolved air amount of the liquid fed in the first and second liquid feeding steps is 70% or less relative to solubility of saturation.

The liquid comprises first and second liquids, the first liquid is adapted to removal of a residual bubble or foam in the die, the second liquid is used for coating. In the first and second liquid feeding steps, the first liquid is fed. Feeding to the manifold is changed over from the first liquid to the second liquid between the second liquid feeding step and the third liquid-feeding/die-moving step.

The die is moved at a speed equal to or less than 3 cm/sec from the offset position to the coating position.

A backup roller is used and contacts the web in the coating position to be transported.

Part of the liquid dropped from the orifice is withdrawn by a withdrawing path disposed under the die.

The decompression chamber includes one portion for constituting the withdrawing path.

The die in the coating position is kept at such an angle satisfying a condition of:

$$90° \leq \theta 3 \leq 150°$$

where $\theta 3$ is an angle defined between the web after coating and an extension of the orifice of the slot.

The die in the coating position is distant from the web at a small clearance, and a minimum of the small clearance is equal to or more than 30 microns and equal to or less than 100 microns.

The die includes plural die blocks arranged in the transporting direction, and the minimum of the small clearance is defined by a lip of one of the die blocks positioned downstream in the transporting direction.

A coating of the liquid on the web has a wet film thickness equal to or less than 10 microns.

In a preferred embodiment, a coater for coating web with a coated layer is provided. A die has a die slot, for ejecting coating liquid. A first conduit supplies bubble removing liquid. A second conduit supplies the coating liquid. A valve is disposed downstream from the first and second conduits, for feeding a selected one of the coating liquid and the bubble removing liquid to the die. A shifting mechanism moves the die between an offset position and a coating position. A controller controls the die, the valve and the shifting mechanism, causes the shifting mechanism to set the die in the offset position, feeds the bubble removing liquid to the die by setting the valve at the first conduit, feeds the coating liquid by setting the valve at the second conduit, and causes the shifting mechanism to move the die to the coating position, to eject the coating liquid from the die in the coating position, whereby a bead of the coating liquid is formed, for applying the coated layer to the web.

Therefore, bubbles are removed from the coating liquid, to obtain the coated layer with high quality free from occurrence of streaks or other defects.

The coated layer has a wet film thickness of 10 microns or less. The shifting mechanism moves the die at a speed equal to or less than 3 cm/sec. The coating liquid comprises solution, contains solute and solvent, and the bubble removing liquid is constituted by the solvent. The die slot is set at a slot angle equal to or more than 15° and equal to or less than 90° with reference to a horizontal plane.

According to the present invention, web can be coated with liquid in a manner free from occurrence of defects due to bubbles in the liquid.

BRIEF DESCRIPTION OF THE DRAWINGS

The above objects and advantages of the present invention will become more apparent from the following detailed description when read in connection with the accompanying drawings, in which:

Fig. 1 is an explanatory view illustrating a coater of the invention;

Fig. 2 is a cross section, partially cutaway, illustrating a relationship of an extrusion die and web in the coating position;

Fig. 3 is a perspective, partially cutaway, illustrating the relationship of the extrusion die and the web together with a decompression chamber;

Fig. 4 is a cross section, partially cutaway, illustrating one preferred embodiment having three die slots in a die, together with the web;

Fig. 5 is a, explanatory view in side elevation, illustrating another preferred embodiment in which a coating position is locate on an upper half of a backup roller; and

Fig. 6 is a view illustrating chemical formulae of discotic compounds.

DETAILED DESCRIPTION OF THE PREFERRED

**EMBODIMENT(S) OF THE PRESENT INVENTION**

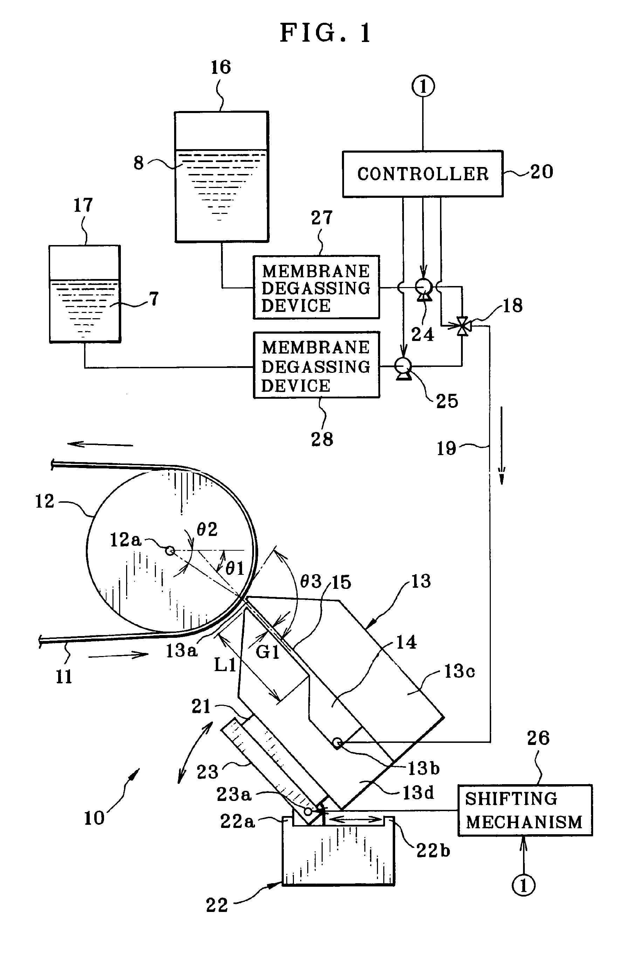

In Fig. 1, a coater 10 of the invention includes a backup roller 12 and an extrusion die 13. Web of polymer 11 is supported and transported by the backup roller 12. A rotational shaft 12a keeps the backup roller 12 rotatable thereabout. The extrusion die 13 includes a manifold 14 and a die slot 15, and is constituted by die blocks 13c and 13d. The manifold 14 extends in the width direction of the extrusion die 13. There is a liquid gate 13b of the extrusion die 13. A liquid conduit 19 is connected with the liquid gate 13b. Coating solution 8 of polymer as liquid is supplied by the liquid conduit 19 into the manifold 14 through the liquid gate 13b. The die slot 15 has a small size in a thickness direction. A proximal end of the die slot 15 is connected with the manifold 14. There is an extrusion orifice 13a where a distal end of the die slot 15 opens externally. The extrusion orifice 13a has a size determined according to a coating width of the solution. The coating solution 8 supplied to the manifold 14 is passed through the die slot 15, and ejected from the extrusion orifice 13a at a regularized flow rate with reference to the width direction.

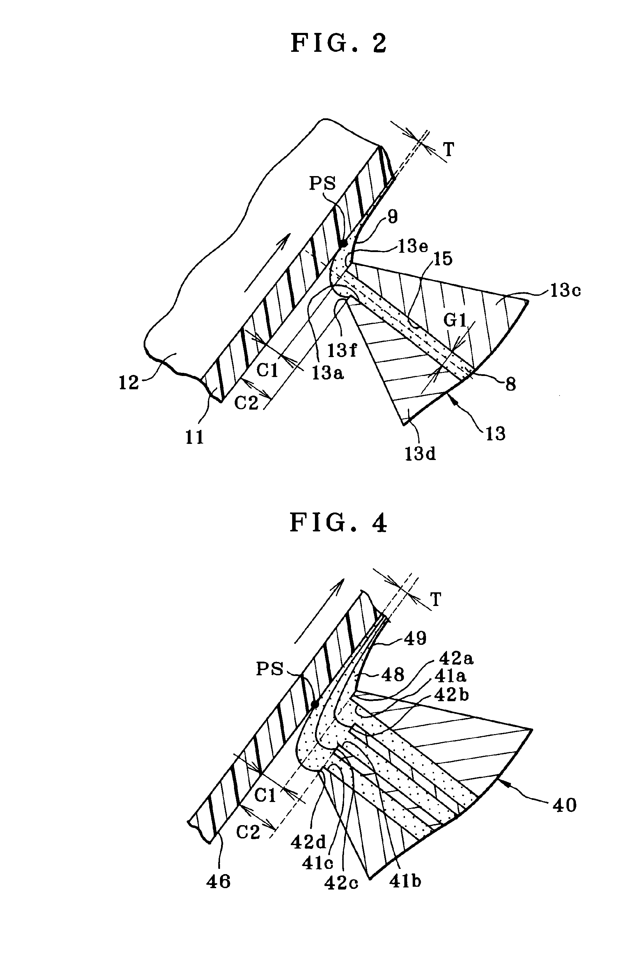

In Fig. 2, the extrusion orifice 13a at the end of the extrusion die 13 in the coating position is disposed close to the web 11. The coating solution 8 being supplied, a bead of solution 9 is formed upon extrusion from the extrusion orifice 13a, and contacts the web 11 being transported. The web 11 is coated with the coating solution 8 as thin film continuously.

In Fig. 1, a first liquid supply source 16 and a second liquid supply source 17 are connected with respectively pumps 24 and 25. A selection valve 18 is connected between a downstream side of the pumps 24 and 25 and the liquid conduit 19. The liquid conduit 19 is connected with the liquid gate 13b of the manifold 14, and disposed to extend with an inclination and increasing height. The first liquid supply source 16 supplies the coating solution 8. The second liquid supply source 17 supplies bubble removing liquid 7 or auxiliary solvent. Note that the bubble removing liquid 7 is for ejecting air from cavities for the coating solution within the extrusion die 13 in the startup step for the coating process. Solvent is selected for the bubble removing liquid 7 with this purpose, because the solvent is remarkably inexpensive. A preferred example of the bubble removing liquid 7 is solvent used for producing the coating solution by dissolving. The coating solution 8 and the bubble removing liquid 7 are changed over by the selection valve 18. The pump 24 or 25 supplies the manifold 14 with the selected one of the coating solution 8 and the bubble removing liquid 7. Also, membrane degassing devices 27 and 28 are installed between the selection valve 18 and the liquid supply sources 16 and 17. The membrane degassing devices 27 and 28 include membrane members, allow the coating solution or auxiliary solvent to pass, and reduce the amount of dissolved air by decompression in the in-line manner. Note that the air in the liquid can be reduced by any suitable degassing device, for example deaeration device or the like.

The manifold 14 has a shape of such a section as to facilitate removal of bubbles at the time of supply of the bubble removing liquid 7 to the manifold 14 to fill the bubble removing liquid 7 in the space by substitution of air. Examples of the shapes of the section of the manifold 14 are a trapezoid, semi-circle, semi-ellipse and the like, in an orientation with their longer side positioned higher. The liquid gate 13b for entry of the liquid to the manifold 14 is positioned at one end and in a form of a side supply structure. However, the liquid gate 13b may be positioned at the center of the manifold 14, or at each of both ends of the manifold 14.

The die slot 15 of the extrusion die 13 has a slot thickness G1 and a length L1. The slot thickness G1 is sufficiently small, in contrast with the length L1 which is sufficiently great. This is for the purpose of thin film coating process in a uniformized extruded amount of the coating solution in the width direction from the die slot 15 by regarding the pressure loss of the die slot 15 as a great part of the pressure loss as an element included in all the cavity of the extrusion die 13. The present coating process is used for a coating layer having a wet film thickness of 10 microns or so. So the length L1 of the die slot 15 is at least 25 mm in the extruding direction with the slot thickness G1 of 50-200 microns. In the present embodiment, the die slot 15 has a straight shape, and the slot thickness G1 kept constant from the manifold 14 to the extrusion orifice 13a. However, the extrusion die 13 according to the invention may have the die slot 15 of which the slot thickness G1 changes gradually or stepwise. The die slot 15 may have a point of a bend without a straight shape, and also may be curved.

In Fig. 2, a first lip land 13e is an end of the die block 13c, which is a part of the extrusion die 13 positioned downstream in the transporting direction. A second lip land 13f is an end of the die block 13d, which is a part of the extrusion die 13 positioned upstream in the transporting direction. The first lip land 13e has an overbite shape. In other words, the first lip land 13e extends nearer to the web 11 than the die block 13d. Material for forming the surface of the die block 13c with the first lip land 13e is ultra hard material. An example of ultra hard material is tungsten carbide.

In Fig. 1, a die holding panel 21 is connected with the extrusion die 13. A movable die holder 23 supports the extrusion die 13 by means of the die holding panel 21. There are rails 22 for keeping the movable die holder 23 shiftable. A pivot 23a keeps the movable die holder 23 rotatable in a range equal to or less than 90° thereabout, and is positioned at an end of the movable die holder 23 opposite to the web. Also, the movable die holder 23 is positioned on the rails 22. A front stopper 22a is disposed on the rails 22 at a front end. A rear stopper 22b is disposed on the rails 22 at a rear end. A shifting mechanism 26 causes the movable die holder 23 to move straight between the front and rear stoppers 22a and 22b. Also, a controller 20 causes the shifting mechanism 26 to adjust the moving speed of the movable die holder 23. A rotating mechanism (not shown) is disposed on the movable die holder 23 for controlling a rotational angle of the extrusion die 13 with the die holding panel 21. A slot angle θ1 of the extrusion die 13 is changeable in a predetermined changing range. Once the slot angle θ1 is determined, the slot angle θ1 is maintained constant.

In the embodiment, the movable die holder 23 stands offset when in contact with the rear stopper 22b. To fill the manifold 14 and the die slot 15 with liquid in the extrusion die 13, to polish or finish the surface of the extrusion orifice 13a, or for other purposes prior to coating operation, the movable die holder 23 is set in the offset position. After this, the movable die holder 23 is moved to the coating position straight for contact with the front stopper 22a. The coating operation is started. When the coating operation is stopped temporarily or finally, the movable die holder 23 is moved to the offset position to contact the rear stopper 22b.

The die slot 15 is kept oriented to cross a horizontal plane with an inclination. Also, the extrusion orifice 13a is directed up. Thus, each of the bubble removing liquid 7 or auxiliary solvent and the coating solution is ejected in the direction of the die slot 15 when exited from the extrusion orifice 13a after passage of the die slot 15. Let the slot angle $\theta 1$ be an angle of a specific cavity surface of the die slot 15 with reference to any horizontal plane, the specific cavity having the slot thickness G1 of 50-200 microns. If the die slot 15 is not straight and if there is a change in the flow angle, the slot angle $\theta 1$ is determined as the smallest value of the flow angle with reference to the horizontal plane. In the present embodiment, the slot angle $\theta 1$ is determinable by rotating the extrusion die 13 with the movable die holder 23 in the range of 0-90° about the pivot 23a.

Let a point PS be a starting point of a coating where a coating layer starts being formed on the web 11 with the bead 9. Let $\theta 3$ be a coating angle defined at the point of intersection between a direction of extrusion of the coating solution 8 from the extrusion orifice 13a and a downstream portion of the web 11 after the coating operation. A combination of the extrusion die 13, the die holding panel 21, the movable die holder 23 and the rails 22 is moved together in a vertical direction. This changes a position of the extrusion orifice 13a relative to the web 11 supported on the backup roller 12, to change the coating angle $\theta 3$. Let $\theta 2$ be an initial angle defined between a horizontal plane and a straight line passing through the starting point PS and a rotational axis of the backup roller 12. A value of the initial angle $\theta 2$ is positive as depicted in Fig. 1 when the initial point is on a lower half of the backup roller 12, and is negative as depicted in Fig. 5 when the initial point is on an upper half of the backup roller 12. The angles $\theta 1$, $\theta 2$ and $\theta 3$ satisfy a condition of

$$\theta 1 - \theta 2 = \theta 3 - 90°.$$

However, a position of intersection between the extrusion orifice 13a and the web 11 does not coincide with the starting point P of the coating in a precise manner. Thus, the condition is that the difference $\theta 1 - \theta 2$ is approximately equal to $\theta 3 - 90°$.

There are firmly fixing mechanisms and stoppers (not shown) associated with movable portions of the extrusion die 13, the die holding panel 21, the movable die holder 23 and the rails 22 for positioning with high precision without errors of the order of one micron. Those are set in predetermined positions and at predetermined angles, and are maintained in the set state exactly for a long time.

In the above embodiment, the movable die holder 23 is movable. However, it is possible to provide the movable die holder 23 with a moving mechanism for movement in a horizontal direction, and a unit for controlling the speed of the moving mechanism. Furthermore, a surface of installing the extrusion die 13 may be inclined. To this end, the die holding panel 21 may have a structure with an inclination. It is preferable for the movable die holder 23 and the die holding panel 21 to have sufficient precision in view of durability even with long time in the consecutive use.

The extrusion die 13 is moved straight, back and forth between the offset position and the coating position. The slot angle $\theta 1$ does not change between those positions. In the present embodiment, the slot angle $\theta 1$ is maintained at a certain angle in a range equal to or more than 15° and equal to or less than 90°. Prior to the coating process, the extrusion die 13 in the offset position is supplied with the bubble removing liquid 7 or auxiliary solvent in the manifold 14, for ejection through the extrusion orifice 13a. Thus, the bubble removing liquid 7 is substituted for the air in the extrusion die 13. The air is ejected through the extrusion orifice 13a as bubbles by buoyancy.

The extrusion die 13 being installed as tilted in the coating position, the general size of the coater including the extrusion die 13, the die holding panel 21 and the backup roller 12 is remarkably great in the height direction. Should the slot angle $\theta 1$ of the inclination be too great, withdrawal of the solvent or coating solution from the die slot 15 is very difficult at the interrupting time or prior to the start of the coating. A lower surface of the die block 13c with reference to the gravity direction will be contaminated with the coating solution 8. Various problems may arise. During or after the coating operation, the extrusion die 13 must be cleaned up to remove the contamination, to complicate the cleanly maintaining operation. Also, the coating solution containing organic solvent having a low melting point is stuck on surfaces of the extrusion die 13 irregularly. This dissipates heat from and cools the die block 13c because of volatilization of the organic solvent. The die block 13c may be deformed according to unexpectedly varied distribution of the surface temperature of the extrusion die 13. Accordingly, it is substantially preferable that the slot angle $\theta 1$ is equal to or more than 15° and equal to or less than 60°. Note that a cover element may be disposed under the extrusion orifice 13a of the extrusion die 13 according to the gravity direction, for protecting the extrusion die 13 from direct contact of the coating solution 8 or portions for receiving the coating solution 8. This makes it possible to withdraw the coating solution 8 without occurrence of uneven distribution of the extrusion die 13 and without contamination of the extrusion die 13, which might be contaminated with solvent or coating solution at the interrupting time or prior to the start of the coating.

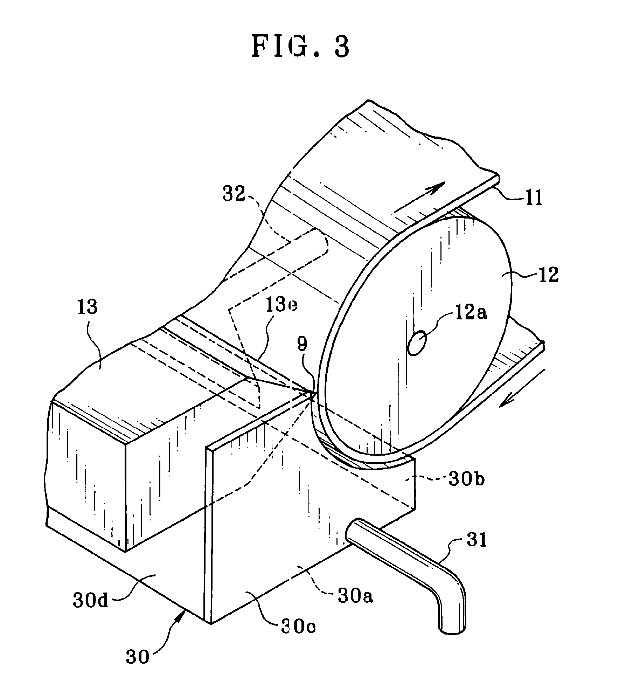

In Fig. 3, the use of a decompression chamber 30 is illustrated. The decompression chamber 30 is for the purpose of optimizing forming of the bead 9, is disposed under the bead 9, and reduces pressure on the back side of the bead 9. The decompression chamber 30 is secured on the side of the extrusion die 13, has a box shape to cover a lower portion of the bead 9. In the decompression chamber 30, there are a lower panel 30a, a front panel 30b, a lateral panel 30c and a rear panel 30d combined in a box shape. A drainpipe 31 is connected with a gap in the lateral panel 30c, and withdraws liquid stored in a lower portion of the decompression chamber 30, the liquid being either one of the coating solution 8 and the bubble removing liquid 7. A suction pipe 32 is connected with a gap in the front panel 30b under the backup roller 12. A blower (not shown) is connected with the suction pipe 32 by use of buffer (not shown), and reduces pressure so as to set a predetermined level of decompression inside the decompression chamber 30. In the present embodiment, optimized decompression at the time of the coating process is in a range equal to or more than $0.4\times10^3$ Pa and equal to or less than $3.0\times10^3$ Pa. It is preferable to use the decompression chamber 30 particularly if the level of decompression is so high that the level of decompression is very difficult to set stably at the start of the coating process. Remarkably, the decompression chamber 30 is effective when the level of decompression is higher than $1.0\times10^3$ Pa. However, the decompression is determined suitably according to various factors including viscosity of the coating solution, surface tension of the coating solution, coating speed, the size of the overbite shape of the die, and the like. The feature of the invention can be applied irrespective of specific conditions of the decompression.

In the present embodiment, the bubble removing liquid 7 ejected from the extrusion orifice 13a of the extrusion die 13 for the preparatory operation is stored on a lower part of the decompression chamber 30, and is withdrawn through the drainpipe 31. This is the situation also for part of the coating solution 8 which has been ejected from the extrusion orifice 13a but not supplied to the web 11 because of interruption of the coating operation. It is possible to reuse this part of the coating solution 8 after the withdrawal. To this end, solvent may be added to the coating solution 8.

Auxiliary solvent is substituted for air. Before the coating process, the manifold 14 in the extrusion die 13 in the offset position is supplied with the bubble removing liquid 7. Air, which has been filled in the die slot 15 of the extrusion die 13 and the liquid conduit 19 extending from the second liquid supply source 17 to the extrusion die 13 is sent out of the extrusion orifice 13a by substitution of the bubble removing liquid 7. Also, part of the air is caught as bubbles in the bubble removing liquid 7, and ejected from the extrusion orifice 13a. This is a process of first liquid feeding for removing air from inside the extrusion die 13 by use of the bubble removing liquid 7. In the first liquid feeding, it is preferable that average of values of the linear flow rate at a portion of the die slot 15 having a slot thickness G1 of 50-200 microns is equal to or less than 3 cm/sec, at a period from the start of the manifold 14 with the solvent, and at least until the solvent exits the extrusion orifice 13a. The linear flow rate is further preferable in such a range that an average of values of the linear flow rate at the die slot 15 is equal to or less than 1.5 cm/sec. Note that a flow rate at the slot is deviated remarkably between positions on a plane of the sectional region. The average is determined by average calculation of various values of those positions. In the present embodiment, the linear flow rate is obtained as a quotient of division of the feeding flow rate by an area of a sectional region of a portion of the die slot 15 having a slot thickness G1 of 50-200 microns. Note that the area of the sectional region of the die slot 15 is a product of multiplication of the slot thickness G1 of the die slot 15 by the coating width.

Even when the ejection of the bubble removing liquid 7 from the extrusion orifice 13a is stopped and completed, the liquid continues being fed for at least five (5) minutes in order to ensure removal of bubbles from the extrusion die 13. This is referred to as a step of second liquid feeding. Note that it is possible in the second liquid feeding to set the flow rate of the auxiliary liquid to the extrusion die 13 different from that in the first liquid feeding.

It is preferable that an auxiliary degassing structure is used for the liquid. An amount of dissolved air should be 70% or less relative to solubility of saturation. Also, an amount of dissolved air should be desirably 50% or less relative to the solubility of saturation. To degas the liquid, any suitable known structure may be used, such as a heater for a tank in the liquid source, a vacuum device or decompression device for reducing the pressure, and an in-line vacuum device or decompression device disposed at a middle of a supply line extending to the die. However, the in-line vacuum device or decompression device is preferable. This is because a target reduced amount of the dissolved air is considerably small, and the degree of the degassing is considerably high, and also because the dissolved air amount of the supplied liquid remain constant without a change. Consequently, the membrane degassing devices 27 and 28 of the vacuum structure are used in the embodiment in order to degas the coating solution 8 and the bubble removing liquid 7.

Any suitable liquid may be supplied into the manifold 14 in the first and second liquid feeding steps prior to the coating and in the offset position. The liquid for bubble removal may be the coating solution 8. But a preferable example of the liquid is solvent. This is because of a loss or cost for discarding by liquid ejected through the extrusion orifice 13a prior to the coating. Should the coating solution be directly used, and withdrawn for reusing, it is required to consider the handling cost or much works of an operator for compensating for the volatilized amount of the solvent.

A preferable example of the liquid should be inexpensive, and can be solvent in general, and may be solvent that is the same as a main component of the coating solution 8.

For the coating solution, various known solvents can be used and dissolved. Examples of the solvents are water, halogenated hydrocarbons, alcohols, ethers, esters, ketones, and the like, and a combination of two or more of those. For the bubble removing liquid 7, substances used as solvents for the coating solution can be used themselves in a single manner or in combination of two or more of those. Also, the bubble removing liquid 7 may be a mixture of a selected one of those solvents, and a certain liquid different from those. Furthermore, it is possible to use liquid as auxiliary liquid in consideration of high compatibility or wettability with material of the extrusion die 13 in contact with the liquid, which is for the purpose of improving effects in removing the foam or bubbles.

The bubble removing liquid 7 is different from the coating solution. Thus, changeover from the bubble removing liquid to the coating solution requires substitution of the coating solution for the bubble removing liquid in the liquid cavities before starting the coating. For example, at first the second liquid supply source 17 supplies the bubble removing liquid, for substitution of air in the extrusion die 13 and defoaming in a predetermined condition. These are the first and second liquid feeding steps. After this, the selection valve 18 is actuated to change over from the liquid of the second liquid supply source 17 to the coating solution of the first liquid supply source 16, to supply the extrusion die 13 with the coating solution. The bubble removing liquid 7 is replaced by the coating solution in the liquid conduit 19 from the selection valve 18 to the extrusion die 13, and in the manifold 14 and the die slot 15 of the extrusion die 13. After the substituting step, there is a third liquid feeding with movement of the die.

At the start of the coating process, the coating solution 8 is supplied into the manifold 14, and extruded through the extrusion orifice 13a. At the same time, the extrusion die 13 is moved straight toward the coating position. Note that a liquid-feeding/die-moving step is constituted by the third liquid feeding and the die moving. In this process, the coating solution 8 is applied to the web 11 in the form of the bead 9. In general, a flow rate of the coating solution 8 in the liquid-feeding/die-moving step is set equal to a coating flow rate, namely a coated amount in the coating process. However, it is possible to raise the initial flow rate higher for the purpose of initial encouragement of the coating process. Furthermore, it is possible to lower the initial flow rate below the normal rate for the purpose of preventing the scattering of the coating solution 8 or other difficulties. However, the operation soon returns to the regular flow rate adapted to normal coating.

The extrusion die 13 preferably satisfy a condition of a moving speed in order to position the extrusion die 13 precisely at the coating position. The moving speed is preferably equal to or more than 5 mm/sec, and equal to or less than 30 mm/sec. Should the moving speed be greater than 30 mm/sec, the movable die holder 23 strikes the front stopper 22a with great shock. Such shock may create errors in the position or the angle of the web 11 having been adjusted at the order of one micron. This is also disadvantageous because of unwanted influence to the decompression condition as predetermined. In the case of application of a coating with a great value of a wet film thickness, a clearance C1 between the extrusion die 13 and the web 11 is as much as 100-300 microns. This is such a great clearance that an incidental difference of several microns does not cause any great problem. The coating according to the embodiment is as thin as 10 microns and by use of a thin film coating technique. This requires the clearance C1 equal to or less than 100 microns between the extrusion die 13 and the web 11. However, the extrusion die 13 can be moved to the coating position with very high precision by regulating the moving speed of the extrusion die 13 at the start of the coating operation even in the thin film coating. Also, errors in the positioning of the extrusion die 13 for the coating position are prevented from occurrence by restricting the moving speed toward the coating position within a predetermined range. The clearance C1 between the extrusion die 13 and the web 11 can be kept with a high precision.

To restrict the moving speed of the extrusion die 13 from the offset position to the coating position in the above range is effective in suppressing occurrence of bubbles in the bead 9. Entry of foam or bubbles in the bead 9 is a serious problem to lower the quality of the coating. This takes place not only at the starting time, but also at the restart of the coating process after required interruption for moving the extrusion die 13 toward the offset position, and then to the coating position. It is likely that interruption in the coating process occurs upon passage of a spliced portion of the web 11 by a portion between the extrusion die 13 and the backup roller 12. The moving speed of the extrusion die 13 from the offset position toward the coating position is in the above-indicated range, but more preferably equal to or more than 5 mm/sec and equal to or less than 20 mm/sec. Furthermore, the moving speed of the extrusion die 13 between any positions in the direction toward the coating position should be in the above-indicated range. If the coating is interrupted, the moving speed of the extrusion die 13 toward the offset position should be in the above-indicated range. It is desirable that an initial level of the moving speed of the extrusion die 13 in this back movement should be desirably in the same range.

In view of effects of the extrusion die 13, a moving speed of the extrusion die 13 is preferably very low, because the creation of bubbles in the bead 9 can be suppressed, and occurrence or transmission of shock to the coater 10 can be suppressed. However, a moving speed of the extrusion die 13 must be determined in consideration of sufficiently high productivity. It follows that the limited conditions indicated above can be satisfied by the above speeds. If priority is given to the productivity over the quality, it is possible to move the movable die holder 23 stepwise in first and second steps. In the first step, the movable die holder 23 can be moved fast. In the second step the movable die holder 23 can be moved toward the coating position at a speed equal to or more than 5 mm/sec and equal to or less than 30 mm/sec. The movable die holder 23 according to a speed changeable structure in stepless type may be constructed in the same manner, so as to set a final speed as equal to or more than 5 mm/sec and equal to or less than 30 mm/sec, the final speed being adapted to the reach to the coating position.

A coating angle θ3 in the coating position is preferably equal to or more than 90°, and equal to or less than 150°. The coating angle θ3 satisfying this condition, the height of the general coater can be reduced. Should the coating angle θ3 be too great, production and finish or die lips is very difficult despite high technique. Thus, a lower upper limit of the coating angle θ3 should be 3.

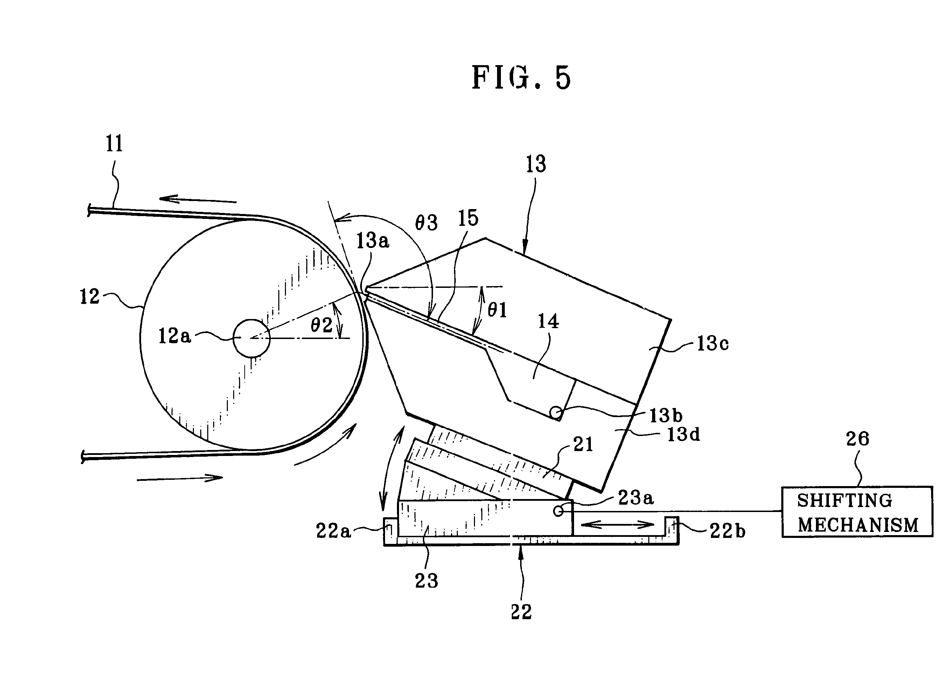

In the present invention, the number of the extrusion orifice 13a and the die slot 15 in connection with the extrusion orifice 13a per one extrusion die 13 may not be one. In Fig. 4, a preferred embodiment of a multi-layer extrusion may be used. An extrusion die 40 has extrusion orifices 41a, 41b and 41c. Lip lands 42a, 42b, 42c and 42d in the extrusion die 40 define the extrusion orifices 41a-41c, and are directed to web of polymer 46. The extrusion die 40 is originally constructed by combining four die blocks which are individual from one another, and include respectively the lip lands 42a-42d. The number of the extrusion orifices 41a-41c is three according to Fig. 4, but may be two, or four or more. The backup roller 12 is not depicted in Fig. 4, but actually operates for supporting the web 46.

As the extrusion die 40 is used for the coating process, three coating solutions are fed to the extrusion die 40, which extrudes the coating solutions to coat the web 46 therewith through the extrusion orifices 41a, 41b and 41c. Note that the number of the coating solutions may be different from three even when the extrusion die 40 is used. A bead of solutions 48 is formed to extend from the extrusion orifices 41a-41c to the web 46 with three layers. Thus, three coating layers 49 are formed on the web 46.

The lip land 42a is nearer to the web 46 than the lip lands 42b, 42c and 42d. This provides a shape of overbite in the extrusion die 40. Note that the lip land 42a defines the extrusion orifice 41a positioned downstream in the transporting direction of the web 46. The clearance C1 between the lip land 42a and the web 46 in the coating position is determined equal to or more than 30 microns and equal to or less than 100 microns. The clearance C2 from the web 46 to the lip lands 42b, 42c and 42d is determined equal to or more than 80 microns and equal to or less than 300 microns. However, it is possible in the invention that the clearance C2 to the web 46 is different between the lip lands 42b, 42c and 42d despite the above description. Furthermore, there is no dependency of the clearance C2 upon an amount C2-C1 of the overbite between the lip land 42a and the lip lands 42b, 42c and 42d. The slot angle θ1 in relation to the extrusion orifices 41a-41c, and the coating angle θ3 in relation to the extrusion orifices 41a, 41b and 41c are in the predetermined range equal to the range for the single-layer type. Note that a coating process according to the invention may be the three-layer multi coating with the extrusion die 40. Of course, the number of the layers according to the multi coating may be two, or four or more in place of three.

Note that, in Fig. 1, the extrusion orifice 13a is directed to a lower portion of the periphery of the backup roller 12 by way of the coating position. However, the extrusion orifice 13a can be directed to an upper portion of the periphery of the backup roller 12. For this coating position, see Fig. 5. This is an embodiment with the higher determined coating position, and enables an operator to handle the apparatus with greater ease prior to the coating process. In Fig. 5, elements similar to those depicted in Fig. 1 are designated with identical reference numerals.

A range of the wet film thickness of the coating layer for the thin film coating with which the structure of the invention can be used is equal to or less than 25 microns in a range with which the structure of the invention can be used. However, the structure can be effective typically in thin film coating in a range equal to or lower than 10 microns. Furthermore, the coating operation of the invention may be a multi-layer type in which a plurality of single-layer coating operation is combined in a serial manner. In the multi-layer type, the structure of the invention can be effective typically in thin film coating in a range equal to or lower than 10 microns for each of the plural layers. A range of the coating speed with which the structure of the invention can be used is equal to or less than 100 m/min.

If surface active agent is contained in the coating solution, bubbles are likely to occur very easily in both single-layer coating and multi-layer coating. However, effects of the invention are remarkable in the coating process with this coating solution. If the coating solution has high viscosity, the substitution of the liquid for the air in the manifold or the die slot 15 in the extrusion die 13 is easy relatively. Occurrence and an amount of bubbles are low and inconspicuous. However, if liquid has low viscosity, occurrence and an amount of bubbles are high and conspicuous because of high possibility in capturing of air as bubbles. Effects of the present invention are remarkable specifically in a system where such liquid with low viscosity is used, also, with as low viscosity as 20 mPa.s or less.

Effects of the present invention are remarkable particularly in a system where the wet film thickness is small, and a system where the coating speed is high, which systems have been regarded as extremely difficult generally in the present technical field. The above-described various features of the embodiment may be used separately from one another, but can be preferably in combined manners. Also, suitable ones may be selected among those features by considering the coating system, and may be used. The coating process of the invention can be a process by use of a die positioned close to the web for applying coating solution, and may be a method of applying a coating by positioning an extrusion die on the web transported by a backup roller. Furthermore, a coating process may be a method of applying a coating by positioning an extrusion die on the web transported without a backup roller. Also, a coating process of the invention may be a slide bead coating or curtain coating.

The construction of the invention is also combined with the following additional structures for suppressing defects or streaks on the coated layer due to bubbles. For example, prior to the coating process, vibration or shock is provided in the liquid with the extrusion die 13 by use of an shaking device, oscillator or vibrator in the course of feeding of the bubble removing liquid 7 or the coating solution 8 to the die. The vibration or shock can defoam the solution in the feeding path and the extrusion die 13 with higher efficiency. Note that vibration or shock can be applied directly to the extrusion die 13, or may be applied to one of the liquid conduit 19, a feeding hose and the like between the second liquid supply source 17 to the extrusion die 13. A position of connecting the shaking device, oscillator or vibrator may be an outer surface of the extrusion die 13, a surface of the die holding panel 21 supporting the extrusion die 13, or other positions of an element indirectly connected with the extrusion die 13 for transmitting vibration or shock sufficiently to the inside of the extrusion die 13. Preferably, a position of the transmission of the vibration or shock is at a distance of 1 meter or less from the liquid gate 13b through which the coating solution is supplied to the extrusion die 13. Also, a panel or inner surface of the manifold of the extrusion die 13 may be provided with a shaking device, oscillator or vibrator, so vibration or shock can be applied to the coating solution directly.

Furthermore, pulsation or fluctuation in a level of a flow rate may be provided in place of the oscillation. In supplying the die with the bubble removing liquid 7 or auxiliary solvent prior to the coating, the efficiency of deforming can be high by the pulsation or fluctuation. To this end, it is preferable to use a pump in the liquid conduit 19 which extends from the second liquid supply source 17 to the extrusion die 13. The pump can have a quick response, and can be controllable for a flow rate quickly at a short time.

Various causes for defects in the coating are conceivable. Residual bubbles are created at the time of supply of the solution in the die slot 15 and other cavities for the feeding. In addition to this, bubbles causing the defects are at least two manners. The first of the two is bubbles initially contained in the solution. The second is bubbles created by separation from dissolved air initially dissolved in the solution. To suppress coating defects due to bubbles, the coating solution should be degassed by a treatment of membrane degassing or the like, so as to use the coating solution with a reduced amount of dissolved air. Also, the solution temperature can be lowered in a downstream direction along the liquid conduit 19, to lower the solubility of air to the solution. This is also effective in preventing occurrence of bubbles. To this end, various elements are controlled for their temperature. For example, a jacket or double tube for the liquid conduit 19 is set at a lower temperature than a jacket for the solution tank. Temperature adjusting/maintaining holes for adjustment of the die are set at a lower temperature than the jacket for the liquid conduit 19.

In the present invention, various known materials can be used for the web 11, 46. Examples of the materials are polymers including polyethylene terephthalate (PET), polyethylene-2,6-naphthalate (PEN), cellulose diacetate (DAC), cellulose triacetate (TAC), cellulose acetate propionate, polyvinyl chloride (PVC), polyvinylidene chloride, polycarbonate (PC), polyimide (PI), polyamide (PA), and the like. The web 11, 46 may be paper, and layered paper with a coating layer or laminated layer. The coating or laminated layer may be alpha-polyolefin having 2-10 carbons, such as polyethylene (PE), polypropylene (PP), ethylene butylene copolymer, and the like. The web 11, 46 may be in a sheet form or film form coated with a preliminary coating layer, of which examples are foils of metals, such as aluminum (Al), copper (Cu), tin (Sn) and the like. Furthermore, the web 11, 46 may have a laminated form constituted by two or more of those examples. The web may be coated with any suitable coating of solution, of which examples include: solution for an optical compensatory sheet, solution for an anti-reflection film, solution for an antiglare film, magnetic material coating solution, photosensitive material coating solution, surface protecting coating solution, antistatic coating solution, lubricant coating solution, and the like. The web after being dried may be cut into a certain size, and slitted at a certain width. Examples of product sheets obtained from the web are an optical compensatory sheet, an anti-reflection film and the like. Further modifications are also possible.

EXAMPLES

[Examples 1 and 2]

The coating process of the invention was experimentally reduced into practice in a known system for producing an optical compensatory sheet. In the widely used optical compensatory sheet producing system, the steps (A), (B) and (C) are included.

    (A) A support of transparent plastic film is prepared, and previously subjected to undercoating of gelatine, saponification with alkali and the like as required. The support is coated with polyvinyl alcohol (PVA) solution and the like, and dried, to form an orientation film resin layer.

(B) Rubbing is effected to rub the orientation film resin layer.

(C) A surface of the orientation film resin layer after the rubbing is coated with a liquid crystal layer which contained hardening resin. Then the coated film is dried, heated, ripened, and hardened by ultraviolet curing, to form an optical anisotropic layer.

The coating process according to the invention was used in the step (C).

The web 11 was film web of cellulose triacetate FUJI TAC (trade name, manufactured by Fuji Photo Film Co., Ltd.), and had a thickness of 100 microns, and a width of 1,300 mm. A surface of the web 11 was coated with a solution of 2 wt.% of long-chain alkyl-modified polyvinyl alcohol (PVA) MP-203 (trade name, manufactured by Kuraray Co., Ltd.) at an amount of 25 ml/m$^2$. The web 11 was dried for one minute at 60°C, to form an orientation film resin layer. The web 11 provided with this orientation film resin layer was transported. A surface of the orientation film resin layer was subjected to a rubbing process, to form an orientation film. The web 11 was transported to a coating applying station for a liquid crystal layer, and was coated with a coating according to the present invention. Note that a rotational peripheral speed was 5.0 m/sec in the rubbing roller in the rubbing process. A pressure for pressing the orientation film resin layer was set 9.8x10$^{-3}$ Pa.

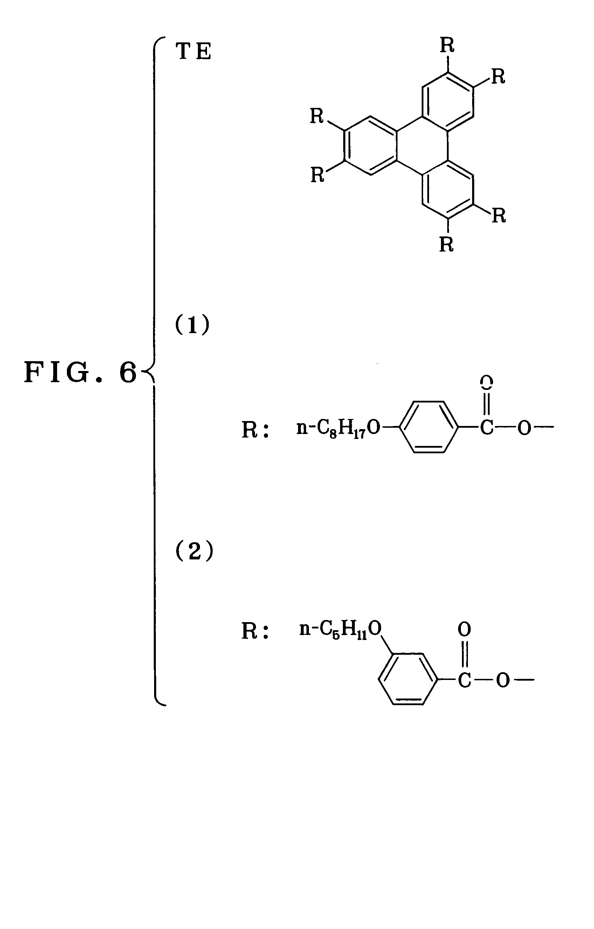

In Fig. 6, two discotic compounds TE-(1) and TE-(2) are illustrated. For coating solution to form a liquid crystal layer, mixture was produced from those discotic compounds at the weight ratio of 4:1. 1 wt.% of optical polymerization initiator IRGACURE 907 (trade name, manufactured by Ciba Geigy Corp.) was added to the mixture. Then 40 wt.% of the mixture was dissolved into methylethylketone (MEK), to obtain the coating solution containing the liquid crystal compounds. The web 11 coated with the coating solution 8 according to the invention was passed through a drying zone at the temperature 100°C and a heating zone at the temperature 130°C. An ultraviolet lamp was used to apply ultraviolet rays to a surface of the liquid crystal layer.

The extrusion die 13 in Fig. 1 with the manifold 14 was used, of which a shape was trapezoidal as viewed in section, having a height of 30 mm, and having a longer side of 30 mm, and a shorter side of 20 mm among two parallel sides. The liquid was supplied through the liquid gate 13b into the manifold 14 by side supply of the liquid. The die slot 15 had the slot thickness G1 which was varied in three values of 300, 200 and 50 microns. The die slot 15 had the slot length L1 of 25 mm. The manifold width and the extruding orifice width was 1,200 mm. The first lip land 13e on the downstream side had a size of 50 microns. The second lip land 13f on the upstream side had a size of 1 mm. An amount of the overbite shape of the extruding orifice was 50 microns. The extrusion die 13 was disposed so as to set the slot angle θ1 according to various values of Examples 1 and 2 in the tables. Also, the clearance C1 between the extrusion die 13 and the web 11 in the coating position was determined in the tables for Examples 1 and 2. The coating angle θ3 was set 100°.

For the supply of the coating solution and movement of the die, there were first, second and third steps prior to the coating operation. In the first liquid feeding step, the coating solution was fed at a slot flow rate of 4.0 cm/sec into the liquid gate 13b of the extrusion die 13 at one end of the manifold 14 in the offset position away from the coating position. The coating solution had a saturated amount of dissolved air. Thus, the coating solution was extruded through the die slot 15 in the extrusion die 13. In the second liquid feeding step, the supply of the coating solution was continued without changes for the time indicated in the table below. In the third liquid-feeding/die-moving step, the extrusion die 13 was moved straight from the offset position to the coating position at a speed of 20 mm/sec. The web 11 traveled at a rate of 50 m/min while coated with the coating solution.

Foam or bubbles were evaluated and indicated in the table according to the following grades.

AA: Nearly no bubbles were found after the start of the coating process.

A: Defects with bubbles were found only in the starting step of the coating process, but nearly no bubbles were found after the lapse of one (1) minute. Allowably high quality without being lowered was obtained.

B: At most one (1) portion of a bubble defect per one (1) m$^2$ was found after the lapse of 1 minute. Allowably high quality was obtained.

F: More than 1 portion and three (3) or fewer portions of a bubble defect per 1 m$^2$ were found after the lapse of 1 minute.

FF: More than 3 portions of a bubble defect per 1 m$^2$ were found after the lapse of 1 minute.

The streaks were evaluated according to the following grades.

A: No streak was found.

B: Partial streaks were round, at most one streak was found as viewed in the width direction of the web, but the web had allowably high quality without being lowered.

F: Long, conspicuous streaks were found, and also two or more streaks were found as viewed in the width direction of the web, so the web had no allowable quality for use.

Contamination on surfaces of the die blocks was evaluated according to the following grades.

A: Nearly no contamination was found on a lower one of the die blocks as viewed in the gravity direction.

B: Partial contamination was found on a surface of the lower die block as viewed in the gravity direction, due to drop of a small amount of the liquid.

F: Conspicuous contamination was found on the entire surface of the lower die block as viewed in the gravity direction, due to drop of the liquid.

| Example | θ1 (°) | θ3 (°) | Slot thickness G1 (microns) |
|---|---|---|---|
| 1, No. 1 | 0 | 100 | 300 |
| 1, No. 2 | ditto | ditto | ditto |
| 1, No. 3 | ditto | ditto | ditto |
| 1, No. 4 | ditto | ditto | 200 |
| 1, No. 5 | ditto | ditto | ditto |
| 1, No. 6 | ditto | ditto | ditto |
| 1, No. 7 | ditto | ditto | ditto |
| 1, No. 8 | ditto | ditto | ditto |

| Example | Clearance C1 (microns) | Wet film thickness (microns) | Slot flow rate (cm/sec) |
|---|---|---|---|
| 1, No. 1 | 100 | 14.4 | 4.0 |
| 1, No. 2 | 60 | ditto | ditto |
| 1, No. 3 | 30 | ditto | ditto |
| 1, No. 4 | 100 | 9.6 | ditto |
| 1, No. 5 | 60 | ditto | ditto |
| 1, No. 6 | 30 | ditto | ditto |
| 1, No. 7 | ditto | ditto | ditto |
| 1, No. 8 | ditto | ditto | ditto |

| Example | 2nd liquid feeding time (min) | Evaluated defects | Evaluated streaks |
|---------|-------------------------------|-------------------|-------------------|
| 1, No. 1 | 10 | B | A |
| 1, No. 2 | ditto | B | B |
| 1, No. 3 | ditto | B | B |
| 1, No. 4 | ditto | F | B |
| 1, No. 5 | ditto | F | F |
| 1, No. 6 | ditto | F | F |
| 1, No. 7 | 5 | F | F |
| 1, No. 8 | 2 | FF | F |

| Example | θ1 (°) | θ3 (°) | Slot thickness G1 (microns) |
|---------|--------|--------|------------------------------|
| 2, No. 1 | 0 | 100 | 200 |
| 2, No. 2 | 10 | ditto | ditto |
| 2, No. 3 | 15 | ditto | ditto |
| 2, No. 4 | 30 | ditto | ditto |
| 2, No. 5 | 60 | ditto | ditto |
| 2, No. 6 | 90 | ditto | ditto |
| 2, No. 7 | 0 | ditto | 200 |
| 2, No. 8 | 10 | ditto | ditto |
| 2, No. 9 | 15 | ditto | ditto |
| 2, No. 10 | 30 | ditto | ditto |
| 2, No. 11 | 60 | ditto | ditto |

| | | | |
|---|---|---|---|
| 2, No. 12 | 90 | ditto | ditto |
| 2, No. 13 | 0 | ditto | 50 |
| 2, No. 14 | 10 | ditto | ditto |
| 2, No. 15 | 15 | ditto | ditto |
| 2, No. 16 | 30 | ditto | ditto |
| 2, No. 17 | 60 | ditto | ditto |
| 2, No. 18 | 90 | ditto | ditto |
| 2, No. 19 | 15 | ditto | ditto |
| 2, No. 20 | 15 | ditto | ditto |

| Example | Clearance Cl (microns) | Wet film thickness (microns) | Slot flow rate (cm/sec) | $2^{nd}$ liquid feeding time (min) |
|---|---|---|---|---|
| 2, No. 1 | 100 | 0.6 | 4.0 | 5 |
| 2, No. 2 | ditto | ditto | ditto | ditto |
| 2, No. 3 | ditto | ditto | ditto | ditto |
| 2, No. 4 | ditto | ditto | ditto | ditto |
| 2, No. 5 | ditto | ditto | ditto | ditto |
| 2, No. 6 | ditto | ditto | ditto | ditto |
| 2, No. 7 | 30 | ditto | ditto | ditto |
| 2, No. 8 | ditto | ditto | ditto | ditto |
| 2, No. 9 | ditto | ditto | ditto | ditto |
| 2, No. 10 | ditto | ditto | ditto | ditto |
| 2, No. 11 | ditto | ditto | ditto | ditto |
| 2, No. 12 | ditto | ditto | ditto | ditto |

| | | | | |
|---|---|---|---|---|
| 2, No. 13 | ditto | 2.4 | ditto | ditto |
| 2, No. 14 | ditto | ditto | ditto | ditto |
| 2, No. 15 | ditto | ditto | ditto | ditto |
| 2, No. 16 | ditto | ditto | ditto | ditto |
| 2, No. 17 | ditto | ditto | ditto | ditto |
| 2, No. 18 | ditto | ditto | ditto | ditto |
| 2, No. 19 | ditto | ditto | ditto | 10 |
| 2, No. 20 | ditto | ditto | ditto | 2 |

| Example | Evaluated defects | Evaluated streaks | Evaluated contamination of die |
|---|---|---|---|
| 2, No. 1 | F | B | A |
| 2, No. 2 | B | A | A |
| 2, No. 3 | A | A | A |
| 2, No. 4 | AA | A | A |
| 2, No. 5 | AA | A | B |
| 2, No. 6 | AA | A | F |
| 2, No. 7 | F | F | A |
| 2, No. 8 | B | B | A |
| 2, No. 9 | A | A | A |
| 2, No. 10 | AA | A | A |
| 2, No. 11 | AA | A | B |
| 2, No. 12 | AA | A | F |
| 2, No. 13 | FF | F | A |

| 2, No. 14 | F | F | A |
|---|---|---|---|
| 2, No. 15 | B | B | A |
| 2, No. 16 | A | A | A |
| 2, No. 17 | AA | A | B |
| 2, No. 18 | AA | A | F |
| 2, No. 19 | B | B | A |
| 2, No. 20 | F | F | A |

In Example 1, Nos. 1-6, the die slot 15 was oriented horizontally with the slot angle θ1 = 0°. According to results of those, when the slot thickness G1 decreased from 300 microns to 200 microns, defects increased on the coating layer due to bubbles. It was observed that, when the slot thickness G1 was 200 microns or less, no allowable products were obtained. It is imagined in this example that air remained in a space from the manifold 14 to the die slot 15 in the extrusion die 13, was not removed prior to the coating process, but was ejected continually during the coating, to create defects on the coating layer.

It was observed from results of Example 1, Nos. 1-3 and Example 1, Nos. 4-6 that streaks of the coated layer became worse and more unwanted according to decrease of the clearance C1 between the web and the lips of the extrusion orifice 13a even with the slot thickness G1 kept constant. It is estimated that the decrease in the clearance C1 caused streaks because of stay of bubbles on the bead 9 between the web 11 and lips of the extrusion die 13 after continual ejection from the extrusion orifice 13a during the coating process.

As a result of Example 2, Nos. 1-18, occurrence of defects due to bubbles decreased according to increase in the slot angle θ1 to raise the inclination angle of the die slot 15 with reference to the horizontal direction. When the slot thickness G1 was in a range of 50-200 microns, allowable products without defects or streaks were obtained by setting the slot angle θ1 equal to or greater than 15°. The feature of the invention was found effective when the clearance C1 was very small. Should the slot angle θ1 be too great, unwanted problems arise as follows. The general size of the coater is considerably great in the height direction. Also, the die may be cooled locally, to create deformation of each of die block because of occurrence of an unbalanced state in the distribution of temperature. Examples of causes of the locally cooled state are contamination of die block surfaces with the liquid or the solution prior to the coating operation for defoaming, or the liquid ejected in the standby sequence, and also vaporization caused by the contamination. Accordingly, a suitable range of the slot angle θ1 is 15-60°. Also, it was observed as results of Example 1, Nos. 6-8, and Example 2, Nos. 15, 19 and 20 that preferable liquid feeding time in the second feeding was 5 minutes or more. When the feeding time was less than 5 minutes, defects due to bubbles were more conspicuous.

[Example 3]

This was conditioned basically in the same manner as Examples 1 and 2, but had the following differences. Before the start of applying a coating, the following was conducted in the offset position. At first, the coating solution was sent to the liquid gate 13b of the manifold 14 in the extrusion die 13. The extrusion orifice 13a ejected the coating solution. This was the first liquid feeding step. Let X (cm/sec) be a feeding flow rate of the solution to the extrusion die 13 in a converted value by way of a linear flow rate within the slot. After this, the feeding flow rate was changed to Y cm/sec as a converted value by way of a linear flow rate within the slot. The solution was sent at Y cm/sec for 5 minutes, during which feeding and ejection were continued. This was the second liquid feeding step. After this, the ejecting flow rate was set as 4 cm/sec. The extrusion die 13 was shifted to the coating position while the coating solution was being extruded from the extrusion orifice 13a, before starting the coating process. This was the third liquid-feeding/die-moving step. The extruding flow rate was 4 cm/sec and was equal to an average of the linear flow rate of the solution within the slot during the coating. Evaluation in the following table was in the same grading as that in the foregoing tables for Examples 1 and 2.

| Example | θ1 (°) | θ3 (°) | Slot thickness G1 (microns) | Clearance C1 (microns) |
|---|---|---|---|---|
| 3, No. 1 | 0 | 100 | 50 | 30 |
| 3, No. 2 (Ex. 2, No. 13) | ditto | ditto | ditto | ditto |
| 3, No. 3 | ditto | ditto | ditto | ditto |
| 3, No. 4 | ditto | ditto | ditto | ditto |
| 3, No. 5 | ditto | ditto | ditto | ditto |
| 3, No. 6 | 15 | ditto | ditto | ditto |
| 3, No. 7 (Ex. 2, No. 15) | ditto | ditto | ditto | ditto |
| 3, No. 8 | ditto | ditto | ditto | ditto |
| 3, No. 9 | ditto | ditto | ditto | ditto |
| 3, No. 10 | ditto | ditto | ditto | ditto |
| 3, No. 11 | ditto | ditto | ditto | ditto |
| 3, No. 12 | ditto | ditto | ditto | ditto |
| 3, No. 13 | ditto | ditto | ditto | ditto |
| 3, No. 14 | ditto | ditto | ditto | ditto |

| Example | Slot flow rate X (cm/sec) before extrusion | Slot flow rate Y (cm/sec) after extrusion | Evaluated defects |
|---|---|---|---|
| 3, No. 1 | 5.0 | 4.0 | FF |
| 3, No. 2 (Ex. 2, No. 13) | 4.0 | ditto | FF |
| 3, No. 3 | 3.0 | ditto | FF |
| 3, No. 4 | 2.0 | ditto | FF |
| 3, No. 5 | 1.5 | ditto | FF |
| 3, No. 6 | 5.0 | ditto | B |
| 3, No. 7 (Ex. 2, No. 15) | 4.0 | ditto | B |
| 3, No. 8 | 3.0 | ditto | A |
| 3, No. 9 | 2.0 | ditto | A |
| 3, No. 10 | 1.5 | ditto | AA |
| 3, No. 11 | 3.0 | 5.0 | A |
| 3, No. 12 | 3.0 | 1.5 | A |
| 3, No. 13 | 5.0 | 3.0 | B |
| 3, No. 14 | 5.0 | 1.5 | B |

It was observed from the results of Example 3, Nos. 1-10 that no changes occurred in defects due to bubbles on the coated layer while the die slot 15 was extended horizontally with the slot angle θ1 = 0, even when the flow rate X was changed for filling of the manifold 14 and the die slot 15 of the extrusion die 13. However, it was observed when the slot angle θ1 = 15° that occurrence of defects was decreased by setting the flow rate X equal to or less than 3 cm/sec, specifically equal to or less than 1.5 cm/sec.

Also, it is concluded after the results of Example 3, Nos. 11-14 that the changes of the flow rate of the supply to the extrusion die 13 do not influence defects of the coating layer if after the extrusion of the liquid through the extrusion orifice 13a.

[Example 4]

Web was coated with coating solution. Before the start of applying the coating, at first, the methylethylketone (MEK) was sent to the liquid gate 13b of the manifold 14 in the extrusion die 13 at flow rates indicated in the table below. The cavity in the extrusion die 13 was filled with the methylethylketone (MEK). This was the first liquid feeding step. After the methylethylketone (MEK) started being ejected from the extrusion orifice 13a, the methylethylketone (MEK) was fed for 5 minutes at each of the unchanged flow rates. Feeding and ejection were continued. This was the second liquid feeding step. After this, the conduit of supply was changed over from the methylethylketone (MEK) to the coating solution, which was fed at an extruding flow rate of 4 cm/sec. The coating solution was substituted for the methylethylketone (MEK) in the extrusion die 13. Then, the extrusion die 13 was shifted to the coating position for the coating solution to exit from the extrusion orifice 13a. This was the third liquid-feeding/die-moving step. For Example 4, Nos. 2-4 and 6-8, the methylethylketone (MEK) was previously processed by the membrane degassing devices 27 and 28, and set at 70% or 50% of an amount of dissolved air relative to the solubility of saturation, before conducting the experiment of Example 4. A used example of the membrane degassing devices 27 and 28 was DMS05F-V/8m (trade name) manufactured by Japan Gore-Tex Inc. For the relative amount of dissolved air in the liquid, an amount of dissolved oxygen dissolved in the methylethylketone (MEK) fed to the die was measured by a dissolved oxygen meter B-505 (trade name) manufactured by lijima Electronic Corporation. The measured value was converted to the dissolved air amount by regarding the measured dissolved oxygen amount as proportional to the dissolved air amount. Remaining conditions other than indicated were the same as those in Examples 1 and 2. Evaluation in the following table was in the same grading as that in the foregoing tables for Examples 1 and 2.

| Example | θ1 (°) | θ3 (°) | Slot thickness G1 (microns) | Clearance C1 (microns) |
|---------|--------|--------|------------------------------|------------------------|
| 4, No. 1 | 15 | 100 | 50 | 30 |
| 4, No. 2 | ditto | ditto | ditto | ditto |
| 4, No. 3 | ditto | ditto | ditto | ditto |
| 4, No. 4 | ditto | ditto | ditto | ditto |
| 4, No. 5 | ditto | ditto | ditto | ditto |
| 4, No. 6 | ditto | ditto | ditto | ditto |
| 4, No. 7 | ditto | ditto | ditto | ditto |
| 4, No. 8 | ditto | ditto | ditto | ditto |

| Example | Slot flow rate (cm/sec) | Ratio (%) of dissolved air amount relative to solubility | Evaluated defects |
|---------|--------------------------|----------------------------------------------------------|-------------------|
| 4, No. 1 | 4.0 | Not degassed, 95% or more | B |
| 4, No. 2 | ditto | Degassed, 85% | B |
| 4, No. 3 | ditto | Degassed, 70% | A |
| 4, No. 4 | ditto | Degassed, 50% | AA |
| 4, No. 5 | 3.0 | Not degassed | A |
| 4, No. 6 | ditto | Degassed, 85% | A |
| 4, No. 7 | ditto | Degassed, 70% | AA |
| 4, No. 8 | ditto | Degassed, 50% | AA |

It is concluded according to results of Example 4, Nos. 1-8 that occurrence of defects on the coating layer was suppressed when the liquid was used after being degassed to reduce air in the liquid to 70 % or less relative to solubility of saturation.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

**Claims**

1. A coating method of coating web (11, 46) with liquid (7, 8) in a form of a bead (9, 48), in which a die (13, 40) is used and includes a manifold (14) and a die slot (15) of which one end is connected with said manifold, and another end (13e, 13f, 42a-42d) constitutes an orifice (13a, 41a-41c), said liquid is fed to said manifold and ejected from said orifice, to form said bead between said orifice and said web in a coating position where said orifice is positioned close to said web being transported, and a decompression chamber (30) is used for reducing pressure of a portion of said web disposed upstream from said bead as viewed in a transporting direction, said coating method comprising:

   a first liquid feeding step of feeding said liquid to said manifold while said die is in an offset position offset from said web, and while said die is kept to direct said orifice upwards and to direct said die slot to extend crosswise to a horizontal plane, wherein said liquid is fed to said orifice readily for ejection;

   a second liquid feeding step of, after said first liquid feeding step, further feeding said liquid commonly used in said first liquid feeding step to said manifold, and ejecting said liquid from said orifice;

   a third liquid-feeding/die-moving step of, after said second liquid feeding step, feeding said liquid to said manifold, ejecting said liquid from said orifice, and simultaneously moving said die from said offset position to said coating position;

   wherein said web starts being coated after said third step.

2. A coating method as defined in claim 1, wherein in said second liquid feeding step, said liquid (7, 8) is fed for 5 minutes or more.

3. A coating method as defined in claim 1, wherein said die slot (15) includes a small-size portion, having a minimum slot thickness (G1) equal to or more than 50 microns and equal to or less than 200 microns, and having a length (L1) equal to or more than 25 mm in a flowing direction of said liquid (7, 8);
   said die (13, 40) in said offset position is kept at such an angle that a condition of:

$$15° \leq \theta1 \leq 90°$$

   is satisfied, and is moved from said offset position to said coating position while kept at said angle, where θ1 is a slot angle of said small-size portion having said minimum slot thickness with reference to said horizontal plane.

4. A coating method as defined in claim 1, wherein in said first liquid feeding step, said liquid (7, 8) is fed to said manifold (14) at such a flow rate that an average of a linear flow rate of said liquid in a small-size portion of said die slot (15) having a minimum slot thickness (G1) is equal to or smaller than 3 cm/sec.

5. A coating method as defined in claim 1, wherein a dissolved air amount of said liquid (7, 8) fed in said first and second liquid feeding steps is 70% or less relative to solubility of saturation.

6. A coating method as defined in claim 1, wherein said liquid (7, 8) comprises first and second liquids, said first liquid (7) is adapted to removal of a residual bubble or foam in said die (13, 40), said second liquid (8) is used for coating;
   in said first and second liquid feeding steps, said first liquid is fed;
   feeding to said manifold (14) is changed over from said first liquid to said second liquid between said second liquid feeding step and said third liquid-feeding/die-moving step.

7. A coating method as defined in claim 1, wherein said die (13, 40) is moved at a speed equal to or less than 3 cm/sec from said offset position to said coating position.

8. A coating method as defined in claim 1, wherein a backup roller (12) is used and contacts said web (11, 46) in said coating position to be transported.

9. A coating method as defined in claim 1, wherein part of said liquid (7, 8) dropped from said orifice (13a, 41a-41c) is withdrawn by a withdrawing path (30a, 31) disposed under said die (13, 40).

10. A coating method as defined in claim 9, wherein said decompression chamber (30) includes one portion for constituting said withdrawing path (30a, 31).

11. A coating method as defined in claim 1, wherein said die (13, 40) in said coating position is kept at such an angle satisfying a condition of:

$$90° \leq \theta3 \leq 150°$$

where θ3 is an angle defined between said web (11, 46) after coating and an extension of said orifice (13a, 41a-41c) of said slot (15).

12. A coating method as defined in claim 1, wherein said die (13, 40) in said coating position is distant from said web (11, 46) at a small clearance (C1), and a minimum of said small clearance is equal to or more than 30 microns and equal to or less than 100 microns.

13. A coating method as defined in claim 12, wherein said die (13, 40) includes plural die blocks arranged in said transporting direction, and said minimum of said small clearance (C1) is defined by a lip (13e, 42a) of one of said die blocks positioned downstream in said transporting direction.

14. A coating method as defined in claim 1, wherein a coating of said liquid (7, 8) on said web (11, 46) has a wet film thickness equal to or less than 10 microns.

15. A coater for coating web (11, 46) with liquid (7, 8) in a form of a bead (9, 48), having a die (13, 40) including a manifold (14) and a die slot (15) of which one end is connected with said manifold, and another end (13e, 13f, 42a-42d) constitutes an orifice (13a, 41a-41c), wherein said liquid is fed to said manifold and ejected from said orifice, to form said bead between said orifice and said web in a coating position where said orifice is positioned close to said web being transported, and having a decompression chamber (30) for reducing pressure of a portion of said web disposed upstream from said bead as viewed in a transporting direction, said coater comprising:

   a die holder (23) for holding said die, to direct said orifice upwards and to direct said die slot to extend crosswise to a horizontal plane;

   a moving mechanism (26) for moving said die holder between an offset position where said die is offset from said web, and said coating position where said die is close to said web for forming said bead;

   a controller (20) for operating in a first liquid feeding step of feeding said liquid to said manifold while said shifting mechanism is in said offset position, wherein said liquid is fed to said orifice readily for ejection, and then for operating in a second liquid feeding step of ejecting said liquid from said orifice for 5 minutes or more while said shifting mechanism is in said offset position, and then for ejecting said liquid from said orifice, and simultaneously moving said shifting mechanism from said offset position to said coating position, to coat said web with said liquid.

16. A coater as defined in claim 15, wherein said die slot (15) includes a small-size portion, having a minimum slot thickness (G1) equal to or more than 50 microns and equal to or less than 200 microns, and having a length (L1) equal to or more than 25 mm in a flowing direction of said liquid (7, 8);
   said die holder (23) keeps said die (13, 40) in said offset position at such an angle satisfying a condition of:

$$15° \leq \theta1 \leq 90°$$

   and moves said die from said offset position to said coating position while kept at said angle, where θ1 is a slot angle of said small-size portion having said minimum slot thickness with reference to said horizontal plane.

17. A coater as defined in claim 15, wherein in said first liquid feeding step, said liquid (7, 8) is fed to said manifold (14) at such a flow rate that an average of a linear flow rate of said liquid in a small-size portion of said die slot (15) having a minimum slot thickness (G1) is equal to or smaller than 3 cm/sec.

18. A coater as defined in claim 15, further comprising a membrane degassing device (27, 28) for reducing a dissolved air amount of said liquid (7, 8) fed in said first and second liquid feeding steps to 70% or less relative to solubility of saturation.

# FIG. 1

EP 1 484 116 A2

# FIG. 2

# FIG. 4

# FIG. 3

EP 1 484 116 A2

FIG. 5

SHIFTING MECHANISM

FIG. 6

TE (1)

R: $n\text{-}C_8H_{17}O$—〇—$\overset{\displaystyle O}{\overset{\|}{C}}$—O—

(2)

R: $n\text{-}C_5H_{11}O$—〇—$\overset{\displaystyle O}{\overset{\|}{C}}$—O—